# EUROPÄISCHE PATENTANMELDUNG

(11) **EP 0 811 433 A2**
(43) Veröffentlichungstag der Anmeldung: **10.12.1997**
(21) Anmeldenummer: 97890099.1
(22) Anmeldetag: 03.06.1997
(51) Int. Cl.: B09B 5/00

(54) **Vorrichtung zum Zerkleinern von Fenstern**

(30) Priorität: 03.06.1996 AT 957/96
(71) Anmelder: Wallner, Josef, 5162 Obertrum am See (AT)
(72) Erfinder: Wallner, Josef, 5162 Obertrum am See (AT)
(74) Vertreter: Babeluk, Michael, Dipl.-Ing. Mag., Patentanwälte Babeluk - Krause

(57) **Zusammenfassung**

Die vorliegende Erfindung betrifft eine Vorrichtung zum Zerkleinern von Fenstern und dgl. Diese besteht aus:
- mindestens einer Fördereinrichtung zum Bewegen der Fenster (3) durch die Vorrichtung;
- einer Einrichtung zum Entglasen der Fenster;
- einer Preßeinrichtung zum Zusammendrücken des entglasten Fensters; und
- Behältern zur Aufnahme der Glasscherben bzw. der übrigen Teile.
Ein zuverlässiger Betrieb wird dadurch erreicht, daß die Fördereinrichtung dazu ausgebildet ist, die Fenster (3) im wesentlichen in senkrechtem Zustand zu fördern wobei eine Kante des Fensters auf einem Fördermittel (1, 2) aufliegt, daß die Einrichtung zum Entglasen der Fenster dazu ausgebildet ist, das Glas seitlich aus dem Fenster herauszuschlagen, und daß die Preßeinrichtung einen beweglich, vorzugsweise schwenkbar gelagerten Balken (7) aufweist, dessen Abstand zum Fördermittel (2) in der Bewegungsrichtung der Fenster (3) abnimmt.

## Beschreibung

Die vorliegende Erfindung betrifft eine Vorrichtung zum Zerkleinern von Fenstern, Fensterrahmen, Türen, Türstöcken, Möbeltüren und dgl. In der Folge werden diese zu zerkleinernden Teile unter dem Begriff "Fenster" zusammengefaßt. Allgemein besteht eine solche Vorrichtung etwa aus:
- mindestens einer Fördereinrichtung zum Bewegen der Fenster durch die Vorrichtung;
- einer Einrichtung zum Entglasen der Fenster;
- einer Preßeinrichtung zum Zusammendrücken des entglasten Fensters; und
- Behältern zur Aufnahme der Glasscherben bzw. der übrigen Teile.

Durch die stark ansteigenden Kosten für die Entsorgung von Müll wird es zunehmend erforderlich, Altstoffe in Komponenten zu trennen und so weit als möglich im Volumen zu verkleinern. Bei der Entsorgung von Fenstern ist so beispielsweise das Glas möglichst von den Rahmen zu trennen, und die sperrigen Rahmen sind in Einzelteile zu brechen, die kompakter zu transportieren und zu lagern sind. Dabei sollen unterschiedlich große Fenster schnell und mit möglichst wenig Eingriff von Bedienungspersonal zu bearbeiten sein.

Eine solche Vorrichtung ist etwa aus der EP-A 618 011 bekannt. Bei dieser Vorrichtung ist ein Bearbeitungstisch vorgesehen, auf den die Fenster flach aufgelegt werden. Von oben her werden die Glasscheiben eingeschlagen und fallen durch Öffnungen in einen Behälter. In einer nachgeordneten Zerkleinerungseinrichtung werden die entglasten Rahmen zerkleinert, wobei die Rahmenteile in einen zweiten Behälter fallen.

Aus der CH-A 684 523 ist ein Verfahren zur Rückgewinnung von Altglas aus Fenstern bekannt. Bei diesem Verfahren werden die zu entglasenden Fenster aus einer Transportvorrichtung liegend über eine Mulde geführt, wobei das Glas oberhalb der Fenster angeordnetes Schlagwerk herausgeschlagen wird.

Solche Vorrichtungen sind zwar grundsätzlich dazu geeignet, eine Trennung und Zerkleinerung durchzuführen, weisen aber im praktischen Betrieb Nachteile auf.

So ist etwa das Einlegen der zu bearbeitenden Fenster in die bekannte Vorrichtung schwierig. Größere Fenster können auch von zwei Bedienungspersonen nur schwer auf den Tisch aufgelegt werden. Dabei besteht Verletzungsgefahr durch herausfallende Glasteile, da in vielen Fällen die Verglasung schon beschädigt ist. Vorzeitig herausfallende Glasteile können weiters auch zu Fehlfunktionen der Vorrichtung führen.

Weiters sollten eventuell am Fenster vorhandene Beschläge abmontiert werden, da Metallteile im Holz Fremdkörper darstellen, die bei der weiteren Verwertung unerwünscht sind. Diese Metallteile können getrennt gesammelt und einer weiteren Verwertung zugeführt werden. Wenn diese Beschläge auf beiden Seiten abzumontieren sind, werden weitere Manipulationsvorgänge notwendig, was den Aufwand weiter erhöht.

Weiters ist aus der EP-A 249 094 eine Vorrichtung bekannt, in der Verbundglasscheiben in einen Reißbrecher gebrochen und gleichzeitig zerrissen werden und in der Folge einen Shredder zugeführt werden, um die Teile zu zerkleinern.

Überdies ist aus der CH-A 400 046 eine Presse zur Zerkleinerung von Müll bekannt. Auch diese Vorrichtungen sind nicht optimal für die Trennung der Bestandteile von Altfenstern in großem Umfang geeignet.

Aufgabe der vorliegenden Erfindung ist es, eine Vorrichtung zu schaffen, bei der die oben beschriebenen Nachteile vermieden werden können, und die es insbesonders ermöglicht, in einfacher Weise die Trennung und Zerkleinerung durchzuführen. Dies soll insbesonders mit einem möglichst geringen Personaleinsatz möglich sein. Dabei soll die Verletzungsgefahr minimiert werden.

Diese Aufgaben werden erfindungsgemäß dadurch gelöst, daß die Fördereinrichtung dazu ausgebildet ist, die Fenster im wesentlichen in senkrechtem Zustand zu fördern, wobei eine Kante des Fensters auf einem Fördermittel aufliegt, daß die Einrichtung zum Entglasen der Fenster dazu ausgebildet ist, das Glas seitlich aus dem Fenster herauszuschlagen, und daß die Preßeinrichtung einen schwenkbar gelagerten Balken aufweist, dessen Abstand zum Fördermittel in der Bewegungsrichtung der Fenster abnimmt.

Die zu bearbeitenden Fenster werden üblicherweise in Containern stehend angeliefert. Mit der erfindungsgemäßen Ausbildung ist es möglich, die Fenster mit einem Schwenkkran oder einem sonstigen Hebezeug aus dem Container herauszuheben und auf das Fördermittel zu stellen. Wenn Beschläge abzumontieren sind, so kann dies erfolgen, während das Fenster am Kran hängt. Auf diese Weise kann auch die Arbeitshöhe optimal eingestellt werden. Da die Fenster nicht umgelegt werden, ist die Gefahr des Herausfallens von Glasteilen minimal.

Es kann jedoch auch eine Spanneinrichtung zum Entfernen von Beschlägen vorgesehen sein.

Die Erfindung ist jedoch nicht auf verglaste Fenster beschränkt, es können mit der erfindungsgemäßen Vorrichtung auch nicht verglaste Bauteile zerkleinert werden, wenn diese anfallen.

In einer besonders vorteilhaften Ausführungsvariante der Erfindung ist das Fördermittel als Förderband ausgebildet. Es kann dabei aus einem flexiblen Material oder einem Metallband aufgebaut sein, oder aus einer Gliederkette, die für einen rauhen Betrieb besonders geeignet ist.

Es ist vorteilhaft, wenn die Fördereinrichtung die Fenster im wesentlichen in waagrechter Richtung fördert. Auf diese Weise wird ein besonders zuverlässiger Betrieb der Anlage erreicht.

Besonders vorteilhaft ist es, wenn die Fördereinrichtung zwei Förderbänder aufweist, von denen eins im Bereich Einrichtung zum Entglasen der Fenster und ein anderes im Bereich Preßeinrichtung angeordnet ist. dadurch kann die Gefahr verringert werden, daß Glasscherben in die Preßeinrichtung eingetragen werden.

Die Produktivität der Vorrichtung kann dadurch gesteigert werden, daß das Förderband im Bereich der Preßeinrichtung schneller angetrieben ist als das Förderband im Bereich Einrichtung zum Entglasen der Fenster. Es ist dann nämlich möglich, daß die einzelnen Fenster Stoß an Stoß durch die Entglasungseinrichtung gefördert werden. In der Preßeinrichtung ist jedoch durch die größere Geschwindigkeit des Förderbandes ein Abstand zwischen den Fenstern gewährleistet, wodurch die Verformung nicht behindert wird.

In einer besonders bevorzugten Ausführungsvariante der vorliegenden Erfindung besteht die Preßeinrichtung aus zwei schwenkbar gelagerten Hebeln, auf denen der Balken in der Form eines Gelenkvierecks gelagert ist, wobei der Abstand des stromaufwärtigen Endes des Balkens vom Fördermittel größer ist als die größte Abmessung in senkrechter Richtung eines zu bearbeitenden Fensters. Dadurch können Rahmen unterschiedlicher Größen problemlos zerkleinert werden, ohne die Anlage umrüsten zu müssen. Es entfallen jedoch auch besondere Sensoren oder Manipulationseinrichtungen, die für eine geeignete Positionierung der Rahmen sorgen. Die erfindungsgemäße Vorrichtung ist daher von besonders einfachem und robustem Aufbau und wenig störanfällig. Die Rahmen werden in einem ersten Arbeitstakt zu einem Parallelogramm verformt. Beim nächsten Arbeitstakt, bei dem der Rahmen schon weiter transportiert worden ist, wird das Parallelogramm weiter verformt. Dieser Vorgang wird so lange wiederholt, bis der Rahmen in die Einzelteile zerfallen ist. Dabei ist kein händischer Eingriff notwendig.

Vorzugsweise ist die Einrichtung zum Entglasen der Fenster als Hammerwerk ausgebildet. Dabei können die einzelnen Hämmer pendelnd aufgehängt sein. Insbesonders ist es günstig, wenn das Hammerwerk beidseitig auf das Fenster einwirkt. Die Hämmer sind auf den beiden Seiten gegeneinander versetzt, so daß jeweils einem Hammer ein Zwischenraum auf der anderen Seite gegenüberliegt. Durch das Auftreffen der Hämmer im Bereich des Rahmens kann eine praktisch vollständige Entglasung gewährleistet werden, was den Wert der getrennten Fraktionen erhöht.

Eine besonders vorteilhafte Wirkung kann erzielt werden, wenn das Hammerwerk aus mehreren Hämmern besteht, die in unterschiedlichem Abstand zur Fördermittel angeordnet sind.

In der Folge wird die Erfindung anhand des in den Figuren dargestellten Ausführungsbeispiels näher erläutert. Die Figuren zeigen:
Fig. 1 schematisch eine seitliche Ansicht der erfindungsgemäßen Vorrichtung;
Fig. 2 einen Schnitt nach Linie II - II in der Fig. 1.

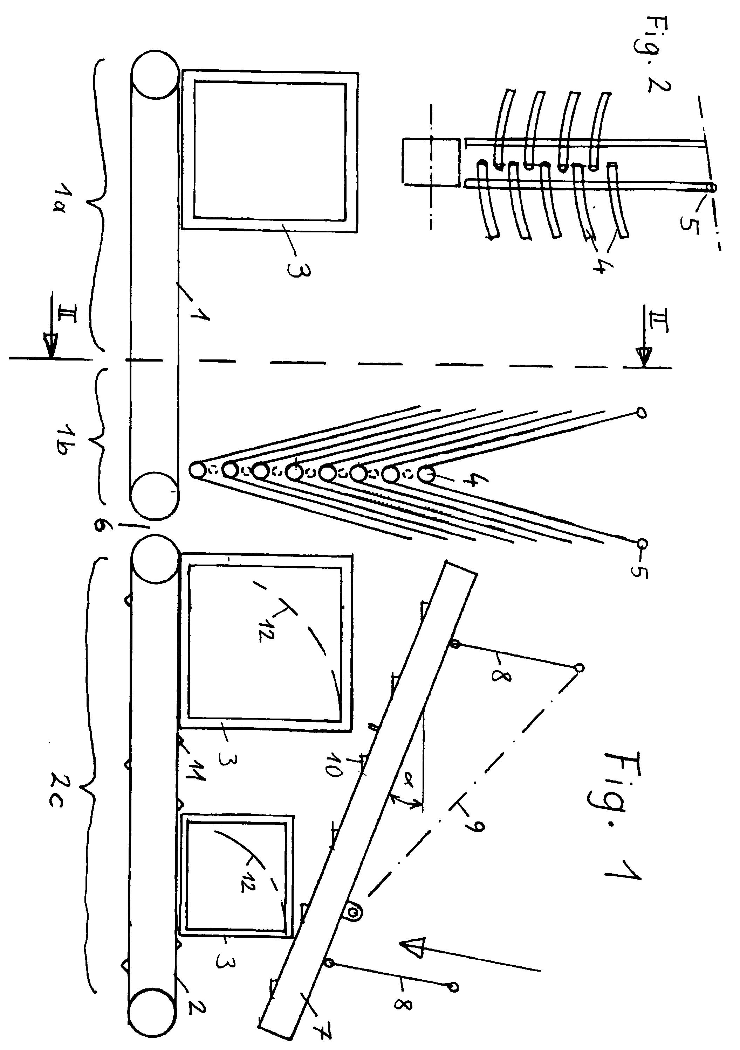

Die erfindungsgemäße Vorrichtung besitzt ein Förderband 1, das einen Einlaufabschnitt la und einen Entglasungsabschnitt 1b aufweist. Dem Förderband 1 ist ein weiteres Förderband 2 unmittelbar nachgeschaltet, das einen Preßabschnitt 2c bedient. Ein Fenster 3 wird auf den Einlaufabschnitt la senkrecht aufgesetzt. Nicht dargestellte Führungen halten das Fenster 3 seitlich.

In Entglasungsabschnitt ist eine Mehrzahl von in unterschiedlicher Höhe pendelnd aufgehängten Hämmern 4 vorgesehen, die von einem nicht dargestellten Motor angetrieben werden. Die Hämmer 4 sind beiderseits der Ebene der Fenster 3 angeordnet und höhenmäßig gegeneinander versetzt, so daß die Hämmer 4 nicht miteinander in Konflikt kommen. Jeder Hammer 4 ist an einer eigenen Aufhängung 5 einzeln gelagert.

Dem Förderband 1 ist ein weiteres Förderband 2 nachgeschaltet, wobei die beiden Förderbänder die Fördereinrichtung bilden. Zwischen den beiden Förderbändern 1, 2 ist ein Spalt 6 vorgesehen, der groß genug ist, daß Glasscherben, die auf dem Förderband 1 liegen geblieben sind, herunterfallen können. Dadurch wird das Eintragen von Glasscherben in den Preßabschnitt verhindert. Andererseits ist der Spalt 6 klein genug, daß die Fenster 3 ohne Behinderung selbsttätig von dem Förderband 1 auf das Förderband 2 weiterbewegt werden. Das Förderband 2 bewegt sich schneller als das Förderband 1. Dadurch wird gewährleistet, daß zwischen den einzelnen Fenstern 3 im Preßabschnitt auch dann ein Abstand gegeben ist, wenn diese im Entglasungsabschnitt 2c Stoß an Stoß gefördert werden. Dieser Abstand ermöglicht die Verformung der Fenster 3 ohne gegenseitige Behinderung. Andererseits kann dadurch die Verweilzeit der Fenster im Entglasungsabschnitt 2c verlängert werden, so daß die Entglasung optimiert werden kann. Unterhalb des ersten Förderbandes 1 ist ein nicht dargestellter Behälter zur Aufnahme der Glasscherben vorgesehen.

Die Preßeinrichtung besteht aus einem Balken 7, der an zwei Gelenkarmen 8 aufgehängt ist. Dadurch wird eine Parallelverschiebung des Balkens 7 ermöglicht. Der Balken 7 wird in eine schwingende Bewegung versetzt. Eine Rückhaltekette 9 begrenzt die Bewegung des Balkens 7 und hält ihn in der individuellen Anpreßrichtung. Der Balken 7 ist gegenüber einer waagrechten Ebene um einen Winkel α geneigt, so daß er sich in der Förderrichtung gesehen dem Förderband 2 annähert. Der Winkel α liegt bevorzugt in einem Bereich zwischen 10° und 30°. Der Balken 7 besitzt Vorsprünge 10, und das Förderband 2 besitzt ebenfalls Vorsprünge 11, um ein Weggleiten von Fenstern 3 zu verhindern.

Die Gelenkarme 8 können Preßzylinder aufweisen, um es zu ermöglichen, daß der Balken 7 zusätzlich zu der Schwenkbewegung eine Bewegung in der Richtung der Schwenkarme 8 ausführen kann. Diese Zylinder können hydraulisch oder pneumatisch betätigt werden. In bestimmten Fällen kann es auch möglich sein, den Balken 7 an entsprechenden Zylindern starr aufzuhängen.

Mit der Linie 12 ist die Auslenkung des vorderen oberen Eckpunktes jedes Fensters 3 angedeutet, wenn es von dem Balken 7 verformt wird. Unterhalb des Förderbandes 2 ist ein nicht dargestellter Behälter zur Aufnahme der Rahmenteile vorgesehen.

Die Vorrichtung entsprechend der vorliegenden Erfindung ermöglicht eine einfache, sichere und effiziente Trennung und Zerlegung von Bauteilen, wie Fenstern. Es wird eine besonders hohe Reinheit der einzelnen Fraktionen erreicht.

## Patentansprüche

1. Vorrichtung zum Zerkleinern von Fenstern und dgl., bestehend aus:
- mindestens einer Fördereinrichtung zum Bewegen der Fenster (3) durch die Vorrichtung;
- einer Einrichtung zum Entglasen der Fenster;
- einer Preßeinrichtung zum Zusammendrücken des entglasten Fensters; und
- Behältern zur Aufnahme der Glasscherben bzw. der übrigen Teile,
dadurch gekennzeichnet, daß die Fördereinrichtung dazu ausgebildet ist, die Fenster (3) im wesentlichen in senkrechtem Zustand zu fördern, wobei eine Kante des Fensters auf einem Fördermittel (1, 2) aufliegt, daß die Einrichtung zum Entglasen der Fenster dazu ausgebildet ist, das Glas seitlich aus dem Fenster herauszuschlagen, und daß die Preßeinrichtung einen beweglich, vorzugsweise schwenkbar gelagerten Balken (7) aufweist, dessen Abstand zum Fördermittel (2) in der Bewegungsrichtung der Fenster (3) abnimmt.

2. Vorrichtung nach Anspruch 1, dadurch gekennzeichnet, daß zusätzlich eine Spanneinrichtung zum Entfernen von Beschlägen vorgesehen ist.

3. Vorrichtung nach Anspruch 1 oder 2, dadurch gekennzeichnet, daß das/die Fördermittel als Förderband (1, 2) ausgebildet ist/sind.

4. Vorrichtung nach einem der Ansprüche 1 bis 3, dadurch gekennzeichnet, daß die Fördereinrichtung die Fenster (3) im wesentlichen in waagrechter Richtung fördert .

5. Vorrichtung nach einem der Ansprüche 1 bis 4, dadurch gekennzeichnet, daß die Fördereinrichtung zwei Förderbänder (1, 2) aufweist, von denen eines im Bereich (1b) der Einrichtung zum Entglasen der Fenster und ein anderes im Bereich (2c) der Preßeinrichtung angeordnet ist.

6. Vorrichtung nach Anspruch 5, dadurch gekennzeichnet, daß das Förderband (2) im Bereich der Preßeinrichtung (2c) schneller angetrieben ist als das Förderband (1) im Bereich (1b) der Einrichtung zum Entglasen der Fenster.

7. Vorrichtung nach einem der Ansprüche 1 bis 6, dadurch gekennzeichnet, daß die Preßeinrichtung aus zwei schwenkbar gelagerten Hebeln (8) besteht, auf denen der Balken (7) in der Form eines Gelenkvierecks gelagert ist, wobei der Abstand des stromaufwärtigen Endes des Balkens (7) vom Fördermittel (2) größer ist als die größte Abmessung in senkrechter Richtung eines zu bearbeitenden Fensters (3).

8. Vorrichtung nach einem der Ansprüche 1 bis 6, dadurch gekennzeichnet, daß die Preßeinrichtung aus zwei Zylindern besteht, auf denen der Balken gelagert ist, wobei der Abstand des stromaufwärtigen Endes des Balkens (7) vom Fördermittel (2) größer ist als die größte Abmessung in senkrechter Richtung eines zu bearbeitenden Fensters (3).

9. Vorrichtung nach einem der Ansprüche 1 bis 8, dadurch gekennzeichnet, daß die Einrichtung zum Entglasen der Fenster als Hammerwerk ausgebildet ist.

10. Vorrichtung nach Anspruch 9, dadurch gekennzeichnet, daß das Hammerwerk beidseitig auf das Fenster einwirkt.

11. Vorrichtung nach einem der Ansprüche 9 bis 10, dadurch gekennzeichnet, daß das Hammerwerk aus mehreren Hämmem (4) besteht, die in unterschiedlichem Abstand zur Fördermittel (2) angeordnet sind.

12. Vorrichtung nach einem der Ansprüche 1 bis 11, dadurch gekennzeichnet, daß der Balken (7) der Preßeinrichtung eine pendelförmige Bewegung ausführt, während die Transporteinrichtung (2) kontinuierlich weiterbewegt wird.
